# FASCICULE DE BREVET EUROPEEN

(11) **EP 2 549 773 B1**
(45) Date de publication et mention de la délivrance du brevet: **25.10.2017**
(21) Numéro de dépôt: 12174798.4
(22) Date de dépôt: 03.07.2012
(51) Int. Cl.: H04Q 11/00

(54) **Dispositif et procédé de fusion de composantes optiques associées à une longueur d'onde en une composante optique fusionnée**
Vorrichtung und Verfahren zum Vermischen von mit einer Wellenlänge assoziierten optischen Komponenten zu einer gemischten optischen Komponente
Device and method for combining optical components associated with a wavelength in a combined optical component

(30) Priorité: 21.07.2011 FR 1156624; 23.03.2012 FR 1252610
(43) Date de publication de la demande: 23.01.2013
(73) Titulaire: Orange, 75015 Paris (FR)
(72) Inventeur: Indre, Raluca-Maria, 75015 PARIS (FR); Bonald, Thomas, 78960 VOISINS LE BRETONNEUX (FR); Cuda, Davide, 11100 AOSTA (IT)

(56) Documents cités:
- EP-A2- 1 838 128
- US-A1- 2004 022 248

## Description

L'invention se situe dans le domaine des réseaux de transmission optique et concerne des dispositifs de fusion d'une pluralité de composantes optiques associées à une longueur d'onde en une composante optique associée à la même longueur d'onde dans ces réseaux.

Le domaine d'application visé est celui des équipements optiques de commutation, en particulier pour les réseaux d'accès optiques et les centres de traitement de données (« Data Center » en anglais).

Il existe deux types d'équipement de commutation dans un réseau optique :
- des routeurs ou commutateurs électroniques, permettant la mise en attente des paquets en cas de congestion ;
- des commutateurs optiques ne traitant pas le trafic au niveau paquet mais permettant d'établir des circuits optiques permanents entre deux routeurs ou commutateurs électroniques.

Afin d'éviter un traitement électronique de chaque paquet, coûteux en énergie, et augmenter les vitesses de commutation, le document intitulé « Optical burst switching (OBS) - A new paradigm for an optical Internet » de C. Qiao et al, publié dans la revue « Journal of High Speed Networks », 8:69-84, 1999, propose d'agréger les paquets en rafales et de commuter les rafales optiquement. Toutefois, un paquet de signalisation doit être envoyé au préalable afin de configurer les commutateurs optiques avant l'arrivée de la rafale. Les performances de cette méthode au niveau de l'utilisation des ressources ne sont pas optimales, la période entre le paquet de signalisation et la rafale n'étant généralement pas utilisable pour commuter d'autres rafales.

Le document « The application of optical packet switching in future communication networks » de M. O'Mahony et al, publié dans la revue « IEEE Communications Magazine » de mars 2001, propose une méthode de commutation optique, dans laquelle les paquets sont agrégés en un paquet optique en fonction de leur destination et de contraintes de qualité de service. Un paquet optique comprend une étiquette indiquant notamment la destination de celui-ci. Un commutateur optique met le paquet optique en file d'attente afin de lire l'étiquette et de configurer la table de commutation puis commute le paquet optique. Le traitement de l'étiquette est électronique. Cette méthode n'est pas pour le moment mature car les performances des mémoires optiques disponibles sont très limitées.

Enfin, la demande EP 1 838 128 A2 propose un système de commutation optique impliquant des émetteurs optiques connectés aux ports d'entrée d'un commutateur optiques. Les émetteurs optiques requièrent auprès du commutateur une connexion à un port de sortie du commutateur, un organe de décision de conflit au sein de ce commutateur gère les éventuels conflits entre signaux optiques émis par les émetteurs en fonction de ces requêtes et instruit à l'émetteur optique autorisé, en cas de conflit, de transmettre des paquets de données sur le port d'entrée auquel il est connecté, tout en bloquant les autres chemins optiques au moyen d'amplificateurs optiques à semi-conducteur placés sur ceux-ci.

Un des buts de l'invention est de remédier à des insuffisances/inconvénients de l'état de la technique et/ou d'y apporter des améliorations.

Selon un premier aspect, l'invention a pour objet un dispositif de fusion d'une pluralité de composantes optiques associées chacune à une même longueur d'onde en l'une des composantes optiques, le dispositif comprenant :
pour chaque composante optique de ladite pluralité à fusionner,
   - des moyens optiques, agencés pour basculer vers une position de blocage de ladite composante optique à fusionner en fonction d'un signal de blocage ;
   - des moyens de combinaison agencés pour obtenir ledit signal de blocage ;
   - des moyens de duplication, agencés pour dupliquer ladite composante optique à fusionner vers les moyens de combinaison ; et
   - des moyens de fusion, agencés pour fusionner les composantes optiques en sortie des moyens optiques, les moyens de combinaison étant agencés pour obtenir ledit signal de blocage en combinant les composantes optiques dupliquées de la pluralité de composantes optiques, en excluant la composante optique dupliquée de ladite composante optique à fusionner.

L'invention tire son origine du constat effectué sur les méthodes existantes de commutation tout optique. Dans ce cadre, une alternative a été recherchée et un besoin d'un dispositif apte à fusionner des composantes optiques associées à une longueur d'onde en une composante optique associée à la même longueur d'onde et apte à gérer les collisions a été identifié. On appelle ici composante optique un signal optique porté par une longueur d'onde donnée.

Le dispositif de fusion selon le premier aspect est remarquable en ce qu'il permet de fusionner plusieurs composantes optiques associées à une même longueur d'onde, tout en gérant les collisions. En cas de présence simultanée sur des ports d'entrée du dispositif de deux composantes optiques, au plus une d'entre elles est présente en sortie du dispositif. Les collisions en entrée du dispositif de fusion sont gérées sans nécessiter d'affecter une longueur d'onde à chacune des sources des composantes optiques. Dans ce dispositif de fusion, seules des opérations élémentaires dans le domaine optique sont effectuées à l'aide de composants disponibles actuellement.

Les différents modes ou caractéristiques de réalisation mentionnés ci-après peuvent être ajoutés indépendamment ou en combinaison les uns avec les autres, au dispositif de fusion selon le premier aspect.

Dans un premier mode de réalisation particulier du dispositif, les moyens optiques sont en outre agencés pour amplifier la composante optique et les moyens de duplication sont connectés en sortie des moyens optiques.

Dans ce cas, lors d'une collision en entrée du dispositif, la composante optique, qui a été présente la première en entrée du dispositif, est transmise. Une deuxième composante optique présente ultérieurement sur un autre port d'entrée du dispositif est bloquée, tant que la première composante optique est présente. Le fonctionnement de ce premier mode de réalisation est basé sur le principe « premier arrivé, premier servi ».

Dans un deuxième mode de réalisation particulier du dispositif, les moyens optiques sont en outre agencés pour amplifier la composante optique et les moyens de duplication sont connectés en entrée des moyens optiques.

Dans ce cas, lors d'une collision en entrée du dispositif, aucune des composantes optiques n'est présente en sortie du dispositif.

Selon une caractéristique particulière, le dispositif de fusion comprend en outre, pour chaque composante optique de ladite pluralité à fusionner, des moyens retardateurs agencés pour appliquer un retard de durée fixe prédéterminée à ladite composante optique à fusionner et connectés en entrée des moyens de blocage associé à ladite composante optique à fusionner.

Ceci permet de configurer les moyens optiques dans la position adaptée, avant l'arrivée de la composante optique.

Dans un troisième mode de réalisation particulier, dans la position de blocage, les moyens optiques dévient ladite composante optique à fusionner vers des moyens d'injection, agencés pour réinjecter ladite composante optique dans une fibre optique à destination d'un noeud source.

Un tel dispositif permet ainsi de signaler à un noeud source, qu'une collision s'est produite et que par conséquent, les données émises ont été supprimées, du fait de la suppression de la composante optique correspondante. Le noeud source ainsi notifié peut émettre de nouveau les données qui ont fait l'objet d'une collision. Le dispositif de fusion dans ce troisième mode de réalisation permet ainsi de gérer les collisions tout en notifiant les noeuds sources émetteurs des pertes éventuels de données.

Il est ici souligné que ceci est réalisé entièrement de façon optique et ainsi sans utilisation de message de signalisation, ni traitement électronique des composantes optiques.

Selon une caractéristique particulière, une unité de contrôle forme les moyens de combinaison.

Cette unité de contrôle permet d'améliorer la gestion des signaux de blocage et d'éviter la transmission de paquets incomplets.

Le dispositif de fusion selon le premier aspect est destiné à être intégré dans un combinateur optique selon un deuxième aspect.

L'invention a ainsi également pour objet un combinateur optique de signaux optiques, un signal optique comportant des composantes optiques respectivement associées à une pluralité de longueurs d'onde, ledit combineur optique comprenant :
- des moyens de démultiplexage respectivement associés à un signal optique en entrée, agencés pour obtenir à partir du signal optique en entrée une pluralité de composantes optiques ;
- une pluralité de dispositifs de fusion selon le premier aspect, respectivement associés à une longueur d'onde et connectés en sortie des moyens de démultiplexage ;
- des moyens de multiplexage, agencés pour multiplexer les composantes optiques en sortie des dispositifs de fusion en un signal optique de sortie.

Ce combinateur optique permet ainsi de multiplexer dans le domaine temporel plusieurs signaux optiques, comprenant des composantes optiques, en un seul signal optique en sortie, en éliminant sur chaque longueur d'onde les paquets provoquant des collisions. Le combinateur optique est dynamique car il ne nécessite pas l'affectation d'une longueur d'onde à chacune des sources des signaux optiques. L'utilisation de la capacité des fibres optiques est ainsi améliorée.

Le combinateur optique est également dynamique, en ce qu'il est possible de fusionner uniquement une partie des composantes optiques formant le signal optique.

Le combinateur optique selon le deuxième aspect apporte une solution simple et efficace au problème de la commutation optique de paquets. En effet, le combinateur ne fait que combiner les signaux optiques : il n'effectue pas d'opération de commutation à proprement parler. La commutation s'effectue grâce aux longueurs d'onde : par exemple, on associe à chaque longueur d'onde sur chaque port d'entrée un unique port de sortie. La table de commutation est donc statique, mais la combinaison des flux (lorsque les flux de plusieurs interfaces d'entrée convergent vers la même interface de sortie) est dynamique, réalisée au moyen de l'invention.

Dans ce combinateur optique, seules des opérations élémentaires dans le domaine optique sont effectuées à l'aide de composants disponibles actuellement. Ceci permet également de le mettre en oeuvre au niveau paquet sur un volume de trafic actuel.

La commutation est effectuée au niveau des paquets, sans nécessiter d'agrégation des paquets. L'utilisation des ressources du réseau optique est ainsi optimisée. La commutation optique d'un paquet est effectuée en un temps compatible avec les contraintes actuelles de commutation, c'est-à-dire de l'ordre de la durée d'un paquet, soit une durée de l'ordre d'une microseconde.

De plus, aucun traitement électronique des paquets n'est requis, ce qui permet de limiter la consommation énergétique du combinateur.

Le combinateur optique ne nécessite pas d'échange de trafic de signalisation, préalablement à la transmission d'un paquet. L'utilisation de la capacité des fibres optiques est ainsi améliorée. Par ailleurs, le combinateur optique ne nécessite pas d'agrégation des paquets, ni mise en file d'attente du paquet optique.

Le combinateur optique selon le deuxième aspect est destiné à être intégré dans un noeud optique d'agrégation de signaux optiques selon un troisième aspect.

L'invention a ainsi également pour objet un noeud optique d'agrégation de signaux optiques, un signal optique comportant une pluralité de composantes optiques respectivement associées à une pluralité de longueurs d'onde, ledit noeud comprenant :
- un combinateur optique de signaux optiques selon le deuxième aspect, agencé pour combiner des signaux optiques respectivement reçus de noeuds optiques sources en un signal optique ;
- un dispositif de distribution d'un signal optique, agencé pour distribuer un signal optique reçu vers lesdits noeuds sources.

Selon un quatrième aspect, l'invention concerne également un procédé de fusion d'une pluralité de composantes optiques chacune associées à une même longueur d'onde en l'une des composantes optiques, comprenant une étape de duplication des composantes optiques de ladite pluralité à fusionner, au cours de laquelle lesdites composantes optiques à fusionner sont dupliquées, le procédé étant caractérisé en ce qu'il comprend en outre :
- une étape d'obtention de signaux de blocage, dans laquelle un signal de blocage associé à une composante optique à fusionner est obtenu en combinant les composantes optiques dupliquées de la pluralité de composantes optiques, à l'exception de la composante optique dupliquée de ladite composante optique à fusionner ;
- une étape de blocage, au cours de laquelle on bloque une composante optique à fusionner en fonction du signal de blocage associé ;
- une étape d'obtention de la composante optique fusionnée associée à la longueur d'onde à partir d'une composante optique non bloquée.

Selon un cinquième aspect, l'invention concerne également un procédé pour combiner optiquement des signaux optiques, un signal optique comportant des composantes optiques respectivement associées à une pluralité de longueurs d'onde, comprenant :
- une étape de démultiplexage des signaux optiques en entrée, pour obtenir à partir d'un signal optique en entrée une pluralité de composantes optiques ;
- une mise en oeuvre du procédé de fusion selon le quatrième aspect, pour les composantes optiques associées à une longueur d'onde obtenues à l'étape de démultiplexage à partir des signaux optiques en entrée ;
- une étape de multiplexage des composantes optiques en sortie obtenues par la mise en oeuvre du procédé de fusion en un signal optique de sortie.

D'autres caractéristiques et avantages de l'invention apparaîtront à l'examen de la description détaillée ci-après, et des dessins annexés sur lesquels :
- la figure 1a représente schématiquement un combinateur optique selon un mode particulier de réalisation de l'invention ;
- la figure 1b représente schématiquement un combinateur optique selon un autre mode particulier de réalisation de l'invention ;
- la figure 2 représente schématiquement un dispositif de fusion selon un mode particulier de réalisation de l'invention ;
- les figures 3a, 3b et 3c représentent trois états de fonctionnement du dispositif de fusion selon un mode particulier de réalisation de l'invention ;
- la figure 4 représente un noeud optique d'agrégation dans son environnement selon un mode particulier de réalisation de l'invention ;
- la figure 5 illustre les étapes d'un procédé de fusion d'une pluralité de composantes optiques selon un mode particulier de réalisation de l'invention ;
- la figure 6 illustre les étapes d'un procédé pour combiner optiquement des signaux optiques selon un mode particulier de réalisation de l'invention ;
- la figure 7 représente schématiquement un dispositif de fusion selon un mode particulier de réalisation de l'invention.

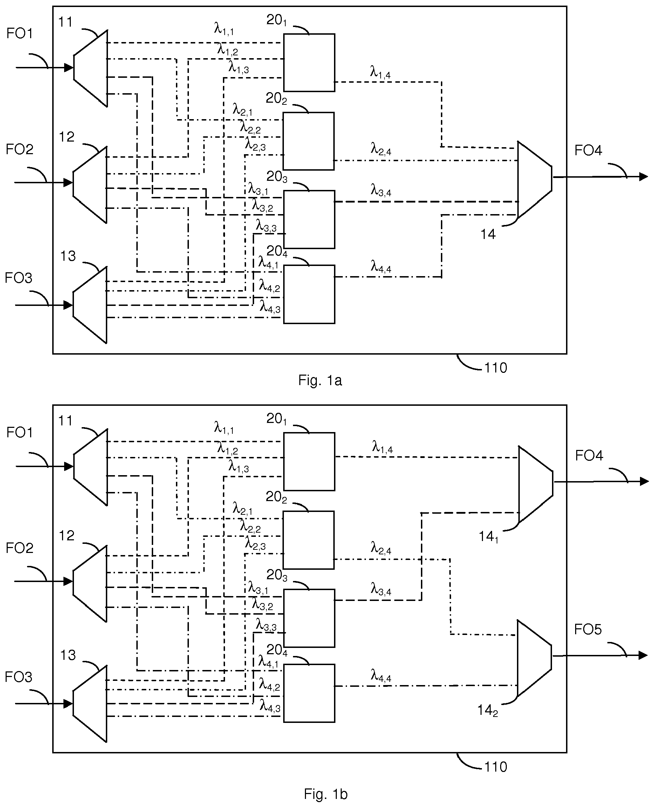

Sur la figure 1a est représenté schématiquement un combinateur optique 110 selon un mode particulier de réalisation de l'invention. Plus précisément, le combinateur optique 110 permet de combiner N signaux optiques en entrée en un signal optique en sortie. Dans l'exemple particulier de la figure 1a, trois signaux optiques sont combinés. Cet exemple est aisément transposable à d'autres configurations en fonction du nombre N de signaux optiques à combiner.

Le premier signal optique est reçu par l'intermédiaire d'une première fibre optique FO1, connectée au combinateur optique 110 sur un premier port d'entrée. Le deuxième signal optique est reçu par l'intermédiaire d'une deuxième fibre optique FO2, connectée au combinateur optique 110 sur un deuxième port d'entrée. Le troisième signal optique est reçu par l'intermédiaire d'une troisième fibre optique FO3, connectée au combinateur optique 110 sur un troisième port d'entrée. Le signal optique en sortie du combinateur optique 110 sur un port de sortie est transmis par l'intermédiaire d'une quatrième fibre optique FO4.

Chacun des signaux optiques en entrée et en sortie comporte une pluralité W de composantes optiques, chaque composante optique étant associée à une longueur d'onde donnée. Dans l'exemple particulier de la figure 1a, quatre composantes optiques forment un signal optique. Aucune limitation n'est attachée au nombre de composantes optiques formant le signal optique. De plus, seul un sous-ensemble de composantes optiques formant le signal optique peut être combiné. Par ailleurs, les nombres N de signaux optiques et W de composantes optiques peuvent être choisis indépendamment l'un de l'autre.

Le premier signal optique en entrée est démultiplexé en quatre longueurs d'onde λ₁, λ₂, λ₃, λ₄ par un premier démultiplexeur 11. En sortie de ce premier démultiplexeur 11, quatre composantes optiques λ_{1,1}, λ_{2,1}, λ_{3,1}, λ_{4,1} du premier signal optique sont obtenues. Le deuxième signal optique en entrée est démultiplexé en quatre longueurs d'onde λ₁, λ₂, λ₃, λ₄ par un deuxième démultiplexeur 12. En sortie de ce deuxième démultiplexeur 12, quatre composantes optiques λ_{1,2}, λ_{2,2}, λ_{3,2}, λ_{4,2} du deuxième signal optique sont obtenues. Le troisième signal optique en entrée est démultiplexé en quatre longueurs d'onde λ₁, λ₂, λ₃, λ₄ par un troisième démultiplexeur 13. En sortie de ce troisième démultiplexeur 13, quatre composantes optiques λ_{1,3}, λ_{2,3}, λ_{3,3}, λ_{4,3} du troisième signal optique sont obtenues.

Les composantes optiques des premier, deuxième et troisième signaux optiques sont ensuite regroupées par longueur d'onde λ₁, λ₂, λ₃, λ₄ et transmises en entrée de dispositifs de fusion 20₁, 20₂, 20₃, 20₄. Les dispositifs de fusion selon l'invention permettent de combiner une pluralité de composantes optiques en une composante optique résultante, de telle sorte que les collisions entre les composantes optiques en entrée du dispositif de fusion sont évitées. Au plus une des composantes optiques générant une collision est sélectionnée.

Plus précisément, les composantes optiques λ_{1,1}, λ_{1,2}, λ_{1,3} sont transmises en entrée du premier dispositif de fusion 20₁ ; les composantes optiques λ_{2,1}, λ_{2,2}, λ_{2,3} sont transmises en entrée du deuxième dispositif de fusion 20₂; les composantes optiques λ_{3,1}, λ_{3,2}, λ_{3,3} sont transmises en entrée du troisième dispositif de fusion 20₃ ; les composantes optiques λ_{4,1}, λ_{4,2}, λ_{4,3} sont transmises en entrée du quatrième dispositif de fusion 20₄.

En sortie du premier dispositif de fusion 20₁, une première composante optique λ_{1,4} associée à la longueur d'onde λ₁ est obtenue. En sortie du deuxième dispositif de fusion 20₂, une deuxième composante optique λ_{2,4} associée à la longueur d'onde λ₂ est obtenue. En sortie du troisième dispositif de fusion 20₃, une troisième composante optique λ_{3,4} associée à la longueur d'onde λ₃ est obtenue. En sortie du quatrième dispositif de fusion 20₄, une quatrième composante optique λ_{4,4} associée à la longueur d'onde λ₄ est obtenue.

Les quatre composantes optiques λ_{1,4}, λ_{2,4}, λ_{3,4}, λ_{4,4} respectivement en sortie des dispositifs de fusion 20₁, 20₂, 20₃, 20₄ sont ensuite injectées dans un multiplexeur 14 afin de former le signal optique en sortie.

La figure 1b illustre un autre mode de réalisation du combinateur optique 110.

Plus précisément, le combinateur optique 110, tel que représenté à la figure 1b, permet de combiner trois signaux optiques en entrée en deux signaux optiques en sortie. Les signaux optiques en sortie du combinateur optique 110 sont respectivement transmis par l'intermédiaire de quatrième FO4 et cinquième FO5 fibres optiques.

Le combinateur optique comporte des moyens de démultiplexage en longueur d'onde 11, 12, 13 et des dispositifs de fusion 20₁, 20₂, 20₃, 20₄ similaires à ceux décrits précédemment en relation avec la figure 1a.

Deux des quatre composantes optiques λ_{1,4}, λ_{3,4} respectivement en sortie des dispositifs de fusion 20₁, 20₃, sont ensuite injectées dans un premier multiplexeur 14₁ afin de former un premier signal optique en sortie.

Les deux autres composantes optiques λ_{2,4}, λ_{3,4} respectivement en sortie des dispositifs de fusion 20₂, 20₄ sont ensuite injectées dans un deuxième multiplexeur 14₂ afin de former un deuxième signal optique en sortie.

Il est ainsi possible dans un combinateur optique de combiner N signaux optiques présents en entrée en M signaux optiques en sortie. Aucune limitation n'est attachée au nombre de signaux optiques en entrée ni à celui de signaux en sortie.

Il est également possible de prévoir dans un tel combinateur optique de combiner les composantes optiques associées à une longueur d'onde donnée présentes sur un premier ensemble de ports d'entrée du combinateur vers un premier port de sortie et celles présentes sur un deuxième ensemble de ports d'entrée du combinateur vers un deuxième port de sortie.

Aucune limitation n'est attachée à ces exemples. Il est ainsi possible de commuter une longueur d'onde sur un port d'entrée vers un port de sortie.

Le combinateur optique a été décrit dans une configuration comprenant trois voies. Le nombre de voies est à adapter en fonction du nombre de longueurs d'onde à traiter. Le nombre de ports d'entrée est à définir du nombre de sources à combiner.

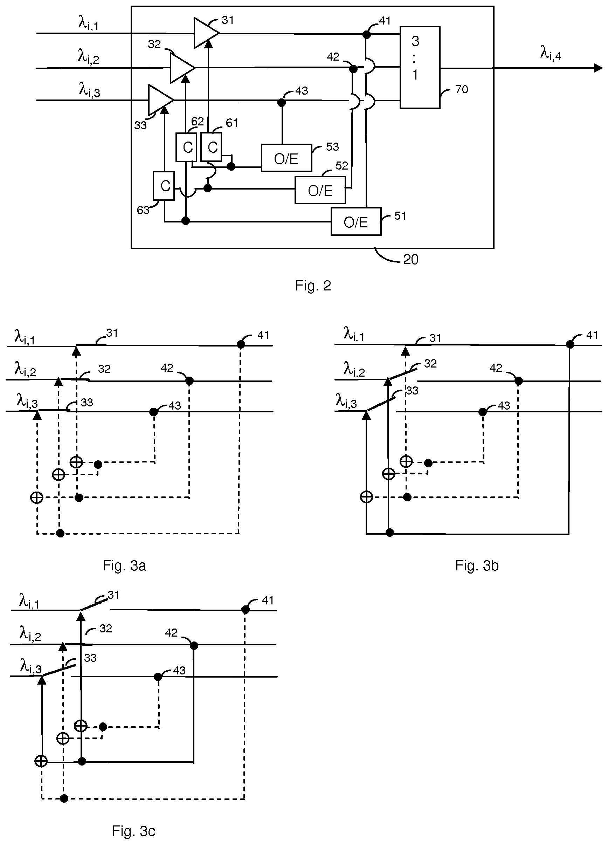

Un dispositif de fusion 20 d'une pluralité de composantes optiques associées à une longueur d'onde en une composante optique associée à cette longueur d'onde selon un mode particulier de réalisation de l'invention va maintenant être décrit en relation avec la figure 2.

Pour une première composante optique λ_{i,1} associée à la longueur d'onde λᵢ, le dispositif de fusion 20 comprend les moyens suivants, formant une première voie :
- des premiers moyens optiques 31, agencés pour basculer vers une position de blocage de cette première composante optique en fonction d'un premier signal de blocage ;
- des premiers moyens de duplication 41, connectés en sortie des premiers moyens optiques 31, agencés pour dupliquer la première composante optique vers deux ports de sortie.

Le premier port de sortie des premiers moyens de duplication 41 est connecté en entrée d'un module de fusion 70, comprenant trois ports d'entrée et un port de sortie. Le module de fusion 70 est agencé pour fusionner des composantes optiques en entrée en une composante optique en sortie. La première composante optique dupliquée est ainsi injectée en entrée du module de fusion 70.

Le deuxième port de sortie des premiers moyens de duplication 41 est connecté en entrée d'un premier convertisseur optoélectronique 51. La première composante optique dupliquée est ainsi convertie en un premier signal électrique.

Pour une deuxième composante optique λ_{i,2} associée à la longueur d'onde λᵢ, le dispositif de fusion 20 comprend les moyens suivants, formant une deuxième voie :
- des deuxièmes moyens optiques 32, agencés pour basculer vers une position de blocage de cette deuxième composante optique en fonction d'un deuxième signal de blocage ;
- des deuxièmes moyens de duplication 42, connectés en sortie des deuxièmes moyens optiques 32, agencés pour dupliquer la deuxième composante optique vers deux ports de sortie.

Le premier port de sortie des deuxièmes moyens de duplication 42 est connecté en entrée du module de fusion 70. La deuxième composante optique dupliquée est ainsi injectée en entrée du module de fusion 70.

Le deuxième port de sortie des deuxièmes moyens de duplication 42 est connecté en entrée d'un deuxième convertisseur optoélectronique 52. La deuxième composante optique dupliquée est ainsi convertie en un deuxième signal électrique.

Pour une troisième composante optique λ_{i,3} associée à la longueur d'onde λᵢ, le dispositif de fusion 20 comprend les moyens suivants, formant une troisième voie :
- des troisièmes moyens optiques 33, agencés pour basculer vers une position de blocage de cette troisième composante optique en fonction d'un troisième signal de blocage ;
- des troisièmes moyens de duplication 43, connectés en sortie des troisièmes moyens optiques 33, agencés pour dupliquer la troisième composante optique vers deux ports de sortie.

Le premier port de sortie des troisièmes moyens de duplication 43 est connecté en entrée du module de fusion 70. La troisième composante optique dupliquée est ainsi injectée en entrée du module de fusion 70.

Le deuxième port de sortie des troisièmes moyens de duplication 43 est connecté en entrée d'un troisième convertisseur optoélectronique 53. La troisième composante optique dupliquée est ainsi convertie en un troisième signal électrique.

Les premiers 31, deuxièmes 32, troisièmes 33 moyens optiques sont en outre prévus pour amplifier la composante optique reçue en entrée, en l'absence d'un signal de blocage. Cette position est dite de transfert. Il s'agit par exemple d'un amplificateur optique semi-conducteur SOA. Aucune limitation n'est attachée à ce type de dispositif. On rappelle ici que lorsque le signal de blocage est présent, ces moyens optiques 31, 32, 33 basculent dans une position de blocage des signaux optiques en entrée de ces moyens.

Les premiers 41, deuxièmes 42, troisièmes 43 moyens de duplication sont par exemple des coupleurs 80-20.

Les deuxième et troisième signaux électriques, issus respectivement des deuxième et troisième voies, sont ensuite combinés par un premier coupleur 61 pour former le premier signal de blocage des premiers moyens optiques 31.

Les premier et troisième signaux électriques, issus respectivement des première et troisième voies, sont ensuite combinés par un deuxième coupleur 62 pour former le deuxième signal de blocage des deuxièmes moyens optiques 32.

Les premier et deuxième signaux électriques, issus respectivement des première et troisième voies, sont ensuite combinés par un troisième coupleur 63 pour former le troisième signal de blocage des troisièmes moyens optiques 33.

Ainsi, pour une composante optique donnée, le dispositif de fusion 20 comporte des moyens de combinaison, agencés pour obtenir un signal de blocage pour des moyens optiques associés à la composante optique donnée en combinant les composantes optiques à fusionner, en excluant la composante optique donnée.

En sortie du module de fusion 70, une composante optique λ_{i,4} est obtenue. Cette composante optique en sortie du dispositif de fusion 20 correspond à la fusion des trois composantes optiques en entrée du dispositif de fusion 20.

Ainsi dans ce premier mode de réalisation, lorsqu'une collision de données entre plusieurs composantes optiques survient en entrée, les données d'une seule composante optique sont présentes en sortie. En effet, lorsqu'une composante optique est sélectionnée, les autres composantes optiques sont bloquées. Ainsi, la composante optique devenant active en premier est sélectionnée pour former la composante optique en sortie. Lorsque la composante optique sélectionnée devient inactive, une autre composante optique devenue active peut être sélectionnée à son tour. Une seule composante optique est sélectionnée parmi les composantes actives en entrée d'un dispositif de fusion pour former la composante optique de sortie, sur la base d'un mécanisme « premier arrivé, premier servi ».

Des états de fonctionnement du dispositif de fusion 20 vont maintenant être détaillés en relation avec les figures 3a, 3b et 3c.

La figure 3a correspond à un état dans lequel aucune composante optique n'est présente sur l'un des ports d'entrée du dispositif de fusion 20.

Les premiers 31, deuxièmes 32, troisièmes 33 moyens optiques sont dans leurs positions de transfert respectives.

La figure 3b correspond à un état dans lequel une première composante optique λ_{i,1} associée à la longueur d'onde λᵢ est présente sur la première entrée du dispositif de fusion 20. Les premiers moyens de duplication 41 dupliquent la première composante optique et permettent de former le premier signal électrique, puis les deuxième et troisième signaux de blocage. Les deuxièmes 32 et troisièmes 33 moyens de blocage basculent alors vers leurs positions de blocage sous commande respectivement des deuxième et troisième signaux de blocage.

La composante optique en sortie du dispositif de fusion 20 est alors formée de la première composante optique. Lorsque la première composante optique devient inactive, le premier signal électrique n'est plus présent et les deuxièmes 32 et troisièmes 33 moyens de blocage reviennent en position de transfert, illustrée à la figure 3a.

La figure 3c correspond à un état dans lequel une deuxième composante optique λ_{i,2} associée à la longueur d'onde λᵢ est présente sur la deuxième entrée du dispositif de fusion 20. Les deuxièmes moyens de duplication 42 dupliquent la deuxième composante optique et permettent de former le deuxième signal électrique, puis les premier et troisième signaux de blocage. Les premiers 31 et troisièmes 33 moyens de blocage basculent alors vers leurs positions de blocage sous commande respectivement des premier et troisième signaux de blocage.

La composante optique en sortie du dispositif de fusion 20 est alors formée de la deuxième composante optique. Lorsque la deuxième composante optique devient inactive, le deuxième signal électrique n'est plus présent et les premiers 31 et troisièmes 33 moyens de blocage reviennent en position de transfert, illustrée à la figure 3a.

Dans l'état illustré à la figure 3c, lorsqu'une troisième composante optique λ_{i,3} associée à la longueur d'onde λᵢ est présente sur la troisième entrée du dispositif de fusion 20, cette troisième composante va être bloquée tant que la deuxième composante est présente en entrée du dispositif.

Un signal optique résiduel est alors susceptible d'être transmis, lorsque les moyens de blocage 33 passent en position de transfert. Afin d'éviter la transmission de ce signal optique résiduel, il est possible de prévoir en option des portes électroniques élémentaires, permettant de maintenir les moyens de blocage 31, 32, 33 en position bloquée tant qu'un signal optique résiduel est présent en entrée. Ceci permet d'améliorer les performances du dispositif en bloquant la transmission de paquets éventuellement incomplets.

Dans le premier mode de réalisation particulier décrit en relation avec les figures 2, 3a, 3b, 3c, les moyens de duplication 41-43 sont connectés en sortie des moyens optiques 31-33.

Ce mode de réalisation présente ainsi l'avantage de gérer les collisions de données en entrée du dispositif de fusion 20 sur la base d'un principe « premier arrivé-premier servi ».

Dans un deuxième mode de réalisation particulier, non représenté, les moyens de duplication 41-43 sont placés en entrée du dispositif de fusion 20. Dans ce cas, les collisions de données en entrée du dispositif de fusion 20 conduisent à une absence de données en sortie du dispositif de fusion 20. Ce deuxième mode de réalisation permet donc de gérer les collisions mais est toutefois moins avantageux que le précédent.

En première variante au premier mode de réalisation du dispositif de fusion 20, les moyens de combinaison 61, 62, 63 combinent des signaux optiques.

Le deuxième port de sortie des premiers moyens de duplication 41 est connecté en entrée des deuxièmes 62 et troisièmes 63 moyens de combinaison, après duplication.

Le deuxième port de sortie des deuxièmes moyens de duplication 42 est connecté en entrée des premiers 61 et troisièmes 63 moyens de combinaison, après duplication.

Le deuxième port de sortie des troisièmes moyens de duplication 43 est connecté en entrée des premiers 61 et deuxièmes 62 moyens de combinaison, après duplication.

Le signal optique en sortie des moyens de combinaison 61 est alors converti en signal électrique par un premier convertisseur optoélectronique pour former le premier signal de blocage.

Le signal optique en sortie des moyens de combinaison 62 est alors converti en signal électrique par un deuxième convertisseur optoélectronique pour former le deuxième signal de blocage.

Le signal optique en sortie des moyens de combinaison 63 est alors converti en signal électrique par un troisième convertisseur optoélectronique pour former le troisième signal de blocage.

Les moyens de combinaison optiques présentent l'avantage d'être passifs et ainsi de ne pas nécessiter d'alimentation électrique.

En deuxième variante au premier mode de réalisation du dispositif de fusion 20, des premiers moyens retardateurs sont connectés en entrée des premiers moyens optiques 31. Ces premiers moyens retardateurs sont agencés pour appliquer un retard de durée fixe prédéterminée D à la première composante optique λ_{i,1} en entrée du dispositif de fusion 20. Il s'agit par exemple d'une ligne à retard optique fixe ou « fiber delay line » en anglais. La durée fixe est déterminée au préalable en fonction du temps nécessaire à la propagation du signal optique et à la configuration des premiers moyens optiques 31. De même, des deuxièmes moyens retardateurs sont connectés en entrée des deuxièmes moyens optiques 32, et des troisièmes moyens retardateurs sont connectés en entrée des troisièmes moyens optiques 33. Les deuxièmes et troisièmes moyens retardateurs sont similaires aux premiers moyens retardateurs.

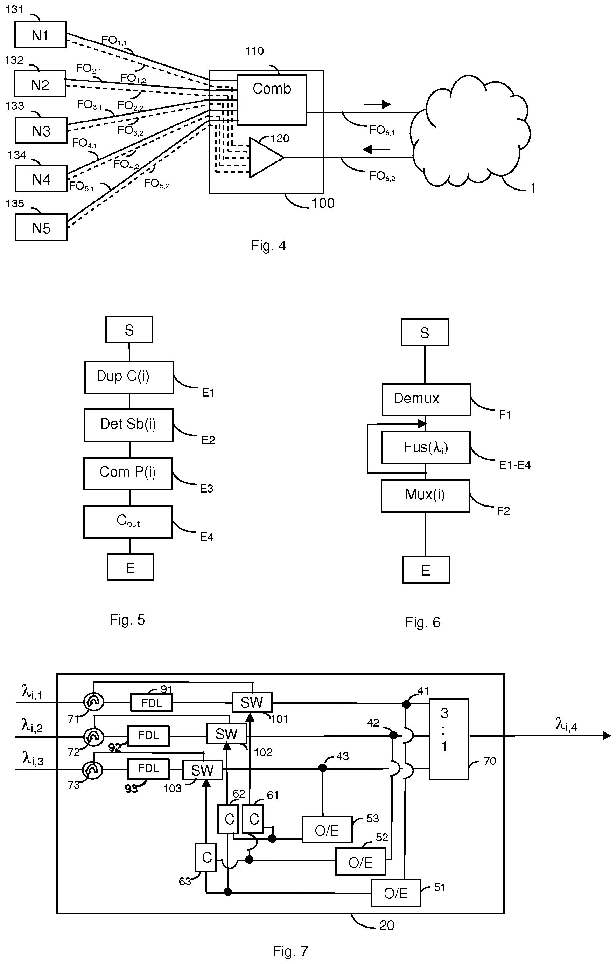

Un dispositif de fusion 20 d'une pluralité de composantes optiques associées à une longueur d'onde en une composante optique associée à cette longueur d'onde selon un troisième mode particulier de réalisation de l'invention va maintenant être décrit en relation avec la figure 7.

Pour une première composante optique λ_{i,1} associée à la longueur d'onde λ_{i,} le dispositif de fusion 20 comprend les moyens suivants, formant une première voie :
- des premiers moyens optiques 101, agencés pour basculer vers une position de blocage de cette première composante optique en fonction d'un premier signal de blocage ;
- des premiers moyens de duplication 41, connectés à un premier port de sortie des premiers moyens optiques 101, agencés pour dupliquer la première composante optique vers deux ports de sortie.

Le premier port de sortie des premiers moyens de duplication 41 est connecté à un module de fusion 70, comprenant trois ports d'entrée et un port de sortie. Le module de fusion 70 est agencé pour fusionner des composantes optiques en entrée en une composante optique en sortie. La première composante optique dupliquée est ainsi injectée en entrée du module de fusion 70.

Le deuxième port de sortie des premiers moyens de duplication 41 est connecté en entrée d'un premier convertisseur optoélectronique 51. La première composante optique est ainsi convertie en un premier signal électrique.

Une sortie de premiers moyens retardateurs 91 est connectée en entrée des premiers moyens optiques 101. Les premiers moyens retardateurs 91 sont agencés pour appliquer un retard de durée fixe prédéterminée D à la première composante optique λ_{i,1} en entrée. Il s'agit par exemple d'une ligne à retard optique fixe. La durée fixe est déterminée au préalable en fonction du temps nécessaire à la propagation du signal optique et à la configuration des premiers moyens optiques 101.

Dans une première position, dite position de transfert, les premiers moyens optiques 101 sont agencés pour commuter la première composante optique λ_{i,1} vers le premier port de sortie, connectés aux premiers moyens de duplication 41. Cette position de transfert correspond à celle prise en l'absence du premier signal de blocage.

Dans une deuxième position, correspondant à la position de blocage, les premiers moyens optiques 101 sont agencés pour transmettre la première composante optique λ_{i,1} vers un deuxième port de sortie. Ce deuxième port de sortie des premiers moyens optiques 101 est connecté à un premier circulateur 71 qui réinjecte dans la fibre optique la première composante optique λ_{i,1} qui a subi une collision, dans le sens inverse du sens de propagation. Le premier circulateur 71 est ainsi placé sur le premier port d'entrée du dispositif de fusion 20 et est agencé pour laisser passer la première composante optique dans le sens de propagation et pour réinjecter un signal en retour dans le sens inverse du sens de propagation.

Pour résumer, lorsque le premier signal de blocage est absent, les premiers moyens optiques 101 sont positionnés dans la position de transfert de la première composante optique vers le premier port de sortie ; lorsque le premier signal de blocage est présent, les premiers moyens optiques 101 sont positionnés dans la position de blocage de la première composante optique et dévient celle-ci vers le deuxième port de sortie. Il s'agit par exemple d'un commutateur de type « Microring resonators » Aucune limitation n'est attachée à ce type de dispositif.

Pour une deuxième composante optique λ_{i,2} associée à la longueur d'onde λ_{i,} le dispositif de fusion 20 comprend les moyens suivants, formant une deuxième voie :
- des deuxièmes moyens optiques 102, agencés pour basculer vers une position de blocage de cette deuxième composante optique en fonction d'un deuxième signal de blocage ;
- des deuxièmes moyens de duplication 42, connectés sur un premier port de sortie des deuxièmes moyens optiques 102, agencés pour dupliquer la deuxième composante optique vers deux ports de sortie.

Le premier port de sortie des deuxièmes moyens de duplication 42 est connecté à la deuxième entrée du module de fusion 70. La deuxième composante optique dupliquée est ainsi injectée en entrée du module de fusion 70.

Le deuxième port de sortie des deuxièmes moyens de duplication 42 est connecté en entrée d'un deuxième convertisseur optoélectronique 52. La deuxième composante optique dupliquée est ainsi convertie en un deuxième signal électrique.

Une sortie de deuxièmes moyens retardateurs 92 est connectée en entrée des deuxièmes moyens optiques 102. Ces deuxièmes moyens retardateurs 92 sont agencés pour appliquer un retard de durée fixe prédéterminée D à la deuxième composante optique λ_{i,2} en entrée et sont similaires aux premiers moyens retardateurs 91.

Les deuxièmes moyens optiques 102 sont similaires aux premiers moyens optiques 101. Lorsque le deuxième signal de blocage est absent, les deuxièmes moyens optiques 102 sont positionnés dans la position de transfert de la deuxième composante optique λ_{i,2} vers le premier port de sortie, connectés aux deuxièmes moyens de duplication 42 ; lorsque le deuxième signal de blocage est présent, les deuxièmes moyens optiques 102 sont positionnés dans la position de blocage de la deuxième composante optique λ_{i,2} et dévient celle-ci vers un deuxième port de sortie. Le deuxième port de sortie des deuxièmes moyens optiques 102 est connecté à un deuxième circulateur 72 qui réinjecte dans la fibre optique la deuxième composante optique λ_{i,2} qui a subi une collision. Le deuxième circulateur 72 est placé sur le deuxième port d'entrée du dispositif de fusion et est similaire au premier circulateur 71.

Pour une troisième composante optique λ_{i,3} associée à la longueur d'onde λᵢ, le dispositif de fusion 20 comprend les moyens suivants, formant une troisième voie :
- des troisièmes moyens optiques 103, agencés pour basculer vers une position de blocage de cette troisième composante optique en fonction d'un troisième signal de blocage ;
- des troisièmes moyens de duplication 43, connectés à un premier port de sortie des troisièmes moyens optiques 103, agencés pour dupliquer la troisième composante optique vers deux ports de sortie.

Le premier port de sortie des troisièmes moyens de duplication 43 est connecté à la troisième entrée du module de fusion 70. La troisième composante optique dupliquée est ainsi injectée en entrée du module de fusion 70.

Le deuxième port de sortie des troisièmes moyens de duplication 43 est connecté en entrée d'un troisième convertisseur optoélectronique 53. La troisième composante optique est ainsi convertie en un troisième signal électrique.

Une sortie de troisièmes moyens retardateurs 93 est connectée en entrée des troisièmes moyens optiques 103. Ces troisièmes moyens retardateurs 93 sont agencés pour appliquer un retard de durée fixe prédéterminée D à la troisième composante optique λ_{i,3} en entrée et sont similaires aux premiers moyens retardateurs 91.

Les troisièmes moyens optiques 103 sont similaires aux premiers moyens optiques 101. Lorsque le troisième signal de blocage est absent, les troisièmes moyens optiques 103 sont positionnés dans la position de transfert de la troisième composante optique λ_{i,3} vers le premier port de sortie, connectés aux troisièmes moyens de duplication 43 ; lorsque le troisième signal de blocage est présent, les troisièmes moyens optiques 103 sont positionnés dans la position de blocage de la troisième composante optique λ_{i,3} et dévient celle-ci vers un deuxième port de sortie. Le deuxième port de sortie des troisièmes moyens optiques 103 est connecté à un troisième circulateur 73 qui réinjecte dans la fibre optique la troisième composante optique λ_{i,3} qui a subi une collision. Le troisième circulateur 73 est placé sur le troisième port d'entrée du dispositif de fusion et est similaire au premier circulateur 71.

Les premiers 41, deuxièmes 42, troisièmes 43 moyens de duplication sont par exemple des coupleurs 80-20.

Les deuxième et troisième signaux électriques, issus respectivement des deuxième et troisième voies, sont ensuite combinés par un premier coupleur 61 pour former le premier signal de blocage des premiers moyens optiques 101.

Les premier et troisième signaux électriques, issus respectivement des première et troisième voies, sont ensuite combinés par un deuxième coupleur 62 pour former le deuxième signal de blocage des deuxièmes moyens optiques 102.

Les premier et deuxième signaux électriques, issus respectivement des première et troisième voies, sont ensuite combinés par un troisième coupleur 63 pour former le troisième signal de blocage des troisièmes moyens optiques 103.

Ainsi, pour une composante optique donnée, le dispositif de fusion 20 comporte des moyens de combinaison, agencés pour obtenir un signal de blocage pour des moyens optiques associés à la composante optique donnée en combinant les composantes optiques à fusionner, en excluant la composante optique donnée.

En sortie du module de fusion 70, une composante optique λ_{i,4} est obtenue. Cette composante optique en sortie du dispositif de fusion 20 correspond à la fusion des trois composantes optiques en entrée du dispositif de fusion 20.

A titre illustratif, des exemples similaires à ceux décrits en relation avec les figures 3a, 3b et 3c sont maintenant décrits.

Dans un premier état, aucune composante optique n'est présente en entrée du dispositif de fusion 20.

Les premiers 101, deuxièmes 102, troisièmes 103 moyens optiques sont dans leurs positions de transfert respectives.

Dans un deuxième état, une première composante optique λ_{i,1} associée à la longueur d'onde λᵢ est présente sur la première entrée du dispositif de fusion 20. Les premiers moyens de duplication 41 dupliquent la première composante optique et permettent de former les deuxième et troisième signaux de blocage. Les deuxièmes 102 et troisièmes 103 moyens optiques basculent alors vers leurs positions de blocage sous commande respectivement des deuxième et troisième signaux de blocage. Lorsqu'une deuxième composante optique est présente en entrée du dispositif, elle est alors réinjectée dans la fibre optique au niveau du deuxième circulateur 72 vers le noeud source correspondant tant que la première composante est présente en entrée du dispositif. Lorsqu'une troisième composante optique est présente en entrée du dispositif, elle est alors réinjectée dans la fibre optique au niveau du troisième circulateur 73 vers le noeud source correspondant tant que la première composante est présente en entrée du dispositif. La composante optique en sortie du dispositif de fusion 20 est alors formée de la première composante optique. Lorsque la première composante optique devient inactive, les deuxième et troisième signaux de blocage ne sont plus présents et les deuxièmes 102 et troisièmes 103 moyens optiques reviennent en position de transfert, correspondant au premier état décrit précédemment.

Dans un troisième état, une deuxième composante optique λ_{i,2} associée à la longueur d'onde λᵢ est présente sur la deuxième entrée du dispositif de fusion 20. Les deuxièmes moyens de duplication 42 dupliquent la deuxième composante optique et permettent de former les premier et troisième signaux de blocage. Les premiers 101 et troisièmes 103 moyens optiques basculent alors vers leurs positions de blocage sous commande respectivement des premier et troisième signaux de blocage. Lorsqu'une première composante optique λ_{i,1} associée à la longueur d'onde λᵢ est présente en entrée du dispositif de fusion 20, cette première composante va être bloquée et réinjectée dans la fibre optique au niveau du premier circulateur 71 vers le noeud source correspondant tant que la deuxième composante est présente en entrée du dispositif. Lorsqu'une troisième composante optique λ_{i,3} associée à la longueur d'onde λᵢ est présente sur la troisième entrée du dispositif de fusion 20, cette troisième composante va être bloquée et réinjectée dans la fibre optique au niveau du troisième circulateur 73 vers le noeud source correspondant tant que la deuxième composante est présente en entrée du dispositif. La composante optique en sortie du dispositif de fusion 20 est alors formée de la deuxième composante optique. Lorsque la deuxième composante optique devient inactive, les premier et troisième signaux de blocage ne sont plus présents et les premiers 101 et troisièmes 103 moyens optiques reviennent en position de transfert, correspondant au premier état décrit précédemment.

Ainsi dans ce troisième mode de réalisation, de façon similaire au premier mode de réalisation, lorsqu'une collision de données entre plusieurs composantes optiques survient en entrée, les données d'une seule composante optique sont présentes en sortie. En effet, lorsqu'une composante optique est sélectionnée, les autres composantes optiques sont bloquées et sont renvoyées par le dispositif de fusion 20 vers les noeuds sources les ayant transmises. Ainsi, la composante optique devenant active en premier est sélectionnée pour former la composante optique en sortie. Lorsque la composante optique sélectionnée devient inactive, une autre composante optique devenue active peut être sélectionnée à son tour. Une seule composante optique est sélectionnée parmi les composantes actives en entrée d'un dispositif de fusion pour former la composante optique de sortie, sur la base d'un mécanisme « premier arrivé, premier servi ».

La première variante décrite en relation avec le premier mode de réalisation est également prévue pour ce troisième mode de réalisation.

Dans une troisième variante à ces modes de réalisation, des portes électroniques élémentaires sont prévues, afin de maintenir les moyens de blocage 31-33, 101-103 en position de blocage tant qu'une composante optique bloquée est présente en entrée du dispositif de fusion 20. En effet, si les moyens de blocage 31-33, 101-103 commutent en position de transfert dès que la composante optique sélectionnée n'est plus présente, un signal résiduel associé à une composante optique bloquée est susceptible d'être toujours présent en entrée du dispositif de fusion. Les portes électroniques élémentaires permettent ainsi d'éviter la transmission de ce signal résiduel, correspondant à un paquet incomplet.

Dans une quatrième variante à ces modes de réalisation, une unité de contrôle est agencée pour former les signaux de blocage, en remplacement des moyens de combinaison 61-63.

Cette unité de contrôle est agencée pour former et transmettre :
- les deuxième et troisième signaux de blocage respectivement aux deuxièmes et troisièmes moyens optiques en présence du premier signal électrique ;
- les premiers et troisièmes signaux de blocage respectivement aux premiers et troisièmes moyens optiques en présence du deuxième signal électrique ;
- les premiers et deuxièmes signaux de blocage respectivement aux premiers et deuxièmes moyens optiques en présence du troisième signal électrique.

Les signaux de blocage transmis sont maintenus pendant une durée prédéterminée, égale à la durée d'un paquet, et tant qu'un signal résiduel correspondant à une composante optique bloquée est présent en entrée du dispositif de fusion. Ainsi, les moyens optiques associés à des composantes optiques bloquées restent en position de blocage tant qu'un signal résiduel est présent en entrée. Par conséquent, seuls des paquets complets sont présents en sortie du dispositif de fusion 20. Cette variante permet également de combiner un nombre plus important de composantes optiques.

De plus, ceci permet également d'améliorer les performances du dispositif de fusion pour le deuxième mode de réalisation en évitant une absence de données en sortie en cas de collision en entrée du dispositif de fusion.

Un noeud optique d'agrégation 100 de signaux optiques va maintenant être décrit en relation avec la figure 4. Un tel noeud d'agrégation permet d'agréger les signaux optiques reçus de noeuds optiques 131-135 en un signal optique et de transmettre ce signal optique de manière tout optique à destination d'un réseau de communication 1, par exemple le réseau Internet, et également de distribuer vers les noeuds optiques 131-135 un signal optique reçu du réseau de communication 1. Ces noeuds optiques appartiennent par exemple à un réseau local LAN, pour « Local Area Network ». Un signal optique est transmis par le premier noeud optique 131 vers le noeud d'agrégation 100 par l'intermédiaire d'une première fibre optique FO_{1,1}. Un signal optique est transmis du noeud d'agrégation 100 vers le premier noeud optique 131 par l'intermédiaire d'une deuxième fibre optique FO_{1,2}. De même, le deuxième noeud optique 132 est relié au noeud d'agrégation 100 par l'intermédiaire de deux fibres optiques FO_{2,1}, FO_{2,2}; le troisième noeud 133 par deux fibres optiques FO_{3,1}, FO_{3,2} ; le quatrième noeud 134 par deux fibres optiques FO_{4,1}, FO_{4,2}; le cinquième noeud 135 par deux fibres optiques FO_{5,1}, FO_{5,2}. Un signal optique est transmis par le noeud d'agrégation 100 vers le réseau de communication 1 par l'intermédiaire d'une première fibre optique FO_{6,1}. Un signal optique vers le noeud d'agrégation 100 est transmis du réseau de communication 1 par l'intermédiaire d'une deuxième fibre optique FO_{6,2}.

Le noeud d'agrégation 100 comprend un combinateur optique 110 de signaux optiques tel que décrit précédemment, agencé pour combiner des signaux optiques respectivement reçus des noeuds optiques 131-135 en un signal optique et un dispositif de distribution 120 d'un signal optique, agencé pour distribuer un signal optique reçu vers les noeuds optiques 131-135. Le combinateur optique 110 comprend notamment dans ce cas quatre ports d'entrée de signaux optiques.

Il est ici souligné que des données générant des collisions sont supprimées par le dispositif de fusion tel que décrit précédemment.

Dans les premier et deuxième modes de réalisation décrits en relation avec la figure 2, ces données supprimées peuvent être réémises par le noeud source à l'expiration d'une temporisation. Il est également possible de prévoir que le noeud d'agrégation notifie par un message de signalisation explicite le noeud source émetteur des données supprimées.

Dans le troisième mode de réalisation décrit en relation avec la figure 7, le noeud source reçoit en retour le signal optique qui n'a pas été transmis du fait d'une collision. Il peut alors émettre de nouveau les données. Il n'est donc pas nécessaire d'attendre l'expiration d'une temporisation, ou bien de mettre en oeuvre une signalisation spécifique pour notifier le noeud source de la suppression des données. Sur réception du signal optique en retour, le noeud source peut émettre de nouveau les données supprimées.

Un tel noeud source, agencé pour coopérer avec le dispositif de fusion selon le troisième mode de réalisation, comprend notamment :
- un émetteur ajustable ;
- un circulateur optique ;
- une photodiode.

Le circulateur optique transmet le signal optique émis par l'émetteur ajustable vers sa destination et permet de dévier le signal optique en retour reçu sur la fibre optique vers la photodiode.

La photodiode permet de convertir un signal optique en retour reçu d'un dispositif de fusion 20 en un signal électrique. Ce signal électrique permet ainsi de notifier le noeud source de l'occurrence d'une collision. Il est ici souligné que le noeud source n'a pas besoin de traiter des données portées par le signal optique en retour.

Lorsque le temps de propagation entre le noeud source et le premier équipement comprenant un dispositif de fusion est inférieur à la durée d'un paquet, lors de l'occurrence d'une collision, le noeud source doit uniquement retransmettre le paquet en cours de transmission. Cette retransmission peut être immédiate ou bien après l'expiration d'une durée prédéterminée. Dans le cas contraire, c'est-à-dire lorsque le temps de propagation entre le noeud source et le premier équipement comprenant un dispositif de fusion est supérieur à la durée d'un paquet, le noeud source détermine alors en fonction de ce temps de propagation quel paquet a fait l'objet d'une collision. Le temps de propagation peut avoir été déterminé préalablement selon de méthodes connues de l'état de la technique.

Afin de permettre aux noeuds optiques 131-135 de communiquer entre eux, des longueurs d'onde particulières sont dédiées au trafic local. Dans ce cas, un premier combinateur optique 110 peut être en charge de fusionner les longueurs d'onde affectées au trafic à destination du réseau de communication 1 et un deuxième combinateur optique en charge de fusionner les longueurs d'onde affectées au trafic local. Il est également envisageable de prévoir un seul combinateur optique, tel que celui décrit en relation avec la figure 1b.

Le dispositif de distribution 120 est alors agencé pour :
- fusionner le signal optique en sortie du deuxième combinateur optique et le signal optique en provenance du réseau de communication 1, et
- distribuer le signal optique résultant de la fusion.

Dans un contexte plus général de l'interconnexion de plusieurs réseaux d'accès optiques comprenant plusieurs niveaux d'agrégation, un ensemble de longueurs d'onde peut être affecté à chaque réseau d'accès optique. Le trafic de données est alors combiné, acheminé et diffusé au niveau de chaque noeud d'agrégation en fonction de l'ensemble de longueurs d'onde affecté.

On se réfère maintenant à la figure 5 sur laquelle sont illustrées les étapes d'un procédé de fusion d'une pluralité de composantes optiques associées à une longueur d'onde en une composante optique fusionnée associée à ladite longueur d'onde, ces étapes pouvant être avantageusement effectuées au moyen du dispositif de fusion 20 de la figure 2.

Le procédé de fusion comprend une étape E1 de duplication des composantes optiques à fusionner, au cours de laquelle lesdites composantes optiques à fusionner sont dupliquées.

Dans une étape E2 du procédé de fusion, on obtient des signaux de blocage. Un signal de blocage est associé à une composante optique à fusionner et est destiné à commander des moyens optiques 31, 32, 33, tels que décrits précédemment. Un signal de blocage associé à une composante optique à fusionner est obtenu en combinant les composantes optiques de la pluralité dupliquées, à l'exception de ladite composante optique à fusionner.

Puis, dans une étape E3, la composante optique à fusionner est bloquée ou non, en fonction du signal de blocage associé obtenu.

La composante optique fusionnée associée à la longueur d'onde est alors obtenue dans une étape E4 à partir de la composante optique non bloquée.

Dans un mode de réalisation particulier, à l'étape E3, la composante optique à fusionner bloquée forme en outre une composante optique en retour, lorsque le signal de blocage est présent.

On se réfère maintenant à la figure 6 sur laquelle sont illustrées les étapes d'un procédé pour combiner optiquement des signaux optiques, un signal optique comportant des composantes optiques respectivement associées à une pluralité de longueurs d'onde, ces étapes pouvant être avantageusement effectuées au moyen du combinateur optique 110 de la figure 1a.

Le procédé pour combiner optiquement comprend une étape F1 de démultiplexage des signaux optiques en entrée, pour obtenir à partir d'un signal optique en entrée une pluralité de composantes optiques.

Le procédé de fusion tel que décrit précédemment est ensuite mis en oeuvre pour les composantes optiques associées à une longueur d'onde obtenues à l'étape de démultiplexage à partir des signaux optiques en entrée. Chaque longueur d'onde est ainsi traitée.

Le procédé pour combiner optiquement comprend ensuite une étape F2 de multiplexage des composantes optiques en sortie obtenues par la mise en oeuvre du procédé de fusion en un signal optique de sortie.

## Revendications

1. Dispositif de fusion (20) d'une pluralité de composantes optiques chacune associées à une même longueur d'onde en l'une des composantes optiques, le dispositif comprenant :
pour chaque composante optique à fusionner de ladite pluralité de composantes optiques,
- des moyens optiques (31-33 ; 101-103), agencés pour basculer vers une position de blocage de ladite composante optique à fusionner en fonction d'un signal de blocage ;
- des moyens de combinaison (61,62,63) agencés pour obtenir ledit signal de blocage ;
- des moyens de duplication (41-43), agencés pour dupliquer ladite composante optique à fusionner vers les moyens de combinaison (61,62,63) ; et
- des moyens de fusion (70), agencés pour fusionner les composantes optiques en sortie des moyens optiques,
**caractérisé en ce que** les moyens de combinaison (61,62,63) sont agencés pour obtenir ledit signal de blocage en combinant les composantes optiques dupliquées de la pluralité de composantes optiques, en excluant la composante optique dupliquée de ladite composante optique à fusionner.

2. Dispositif de fusion selon la revendication 1, dans lequel les moyens optiques sont en outre agencés pour amplifier la composante optique et les moyens de duplication sont connectés en sortie des moyens optiques.

3. Dispositif de fusion selon la revendication 1, dans lequel les moyens optiques sont en outre agencés pour amplifier la composante optique et les moyens de duplication sont connectés en entrée des moyens optiques.

4. Dispositif de fusion selon la revendication 1, comprenant en outre pour chaque composante optique de ladite pluralité à fusionner, des moyens retardateurs (91,92,93) agencés pour appliquer un retard de durée fixe prédéterminée à ladite composante optique à fusionner et connectés en entrée des moyens de blocage associé à ladite composante optique à fusionner.

5. Dispositif de fusion selon la revendication 1 ou 4, dans lequel dans la position de blocage, les moyens optiques dévient ladite composante optique à fusionner vers des moyens d'injection (71-73), agencés pour réinjecter ladite composante optique dans une fibre optique à destination d'un noeud source.

6. Dispositif de fusion selon l'une quelconque des revendications précédentes, dans lequel une unité de contrôle forme les moyens de combinaison.

7. Combinateur optique de signaux optiques, un signal optique comportant des composantes optiques respectivement associées à une pluralité de longueurs d'onde, ledit combineur optique comprenant :
- des moyens de démultiplexage (11-13) respectivement associés à un signal optique en entrée, agencés pour obtenir à partir du signal optique en entrée une pluralité de composantes optiques ;
- une pluralité de dispositifs de fusion (20₁-20₄) selon la revendication 1, respectivement associés à une longueur d'onde et connectés en sortie des moyens de démultiplexage ;
- des moyens de multiplexage (14), agencés pour multiplexer les composantes optiques en sortie des dispositifs de fusion en un signal optique de sortie.

8. Noeud optique (100) d'agrégation de signaux optiques, un signal optique comportant une pluralité de composantes optiques respectivement associées à une pluralité de longueurs d'onde, ledit noeud comprenant :
- un combinateur optique de signaux optiques selon la revendication 7, agencé pour combiner des signaux optiques respectivement reçus de noeuds optiques sources en un signal optique ;
- un dispositif de distribution d'un signal optique, agencé pour distribuer un signal optique reçu vers lesdits noeuds sources.

9. Procédé de fusion d'une pluralité de composantes optiques chacune associées à une même longueur d'onde en l'une des composantes optiques, comprenant une étape (E1) de duplication des composantes optiques de ladite pluralité à fusionner, au cours de laquelle lesdites composantes optiques à fusionner sont dupliquées, le procédé étant **caractérisé en ce qu'**il comprend en outre :
- une étape (E2) d'obtention de signaux de blocage, dans laquelle un signal de blocage associé à une composante optique à fusionner est obtenu en combinant les composantes optiques dupliquées de la pluralité de composantes optiques, à l'exception de la composante optique dupliquée de ladite composante optique à fusionner ;
- une étape (E3) de blocage, au cours de laquelle on bloque une composante optique à fusionner en fonction du signal de blocage associé ;
- une étape (E4) d'obtention de la composante optique fusionnée associée à la longueur d'onde à partir d'une composante optique non bloquée.

10. Procédé pour combiner optiquement des signaux optiques, un signal optique comportant des composantes optiques respectivement associées à une pluralité de longueurs d'onde, comprenant :
- une étape de démultiplexage des signaux optiques en entrée, pour obtenir à partir d'un signal optique en entrée une pluralité de composantes optiques ;
- une mise en oeuvre du procédé de fusion selon la revendication 9, pour les composantes optiques associées à une longueur d'onde obtenues à l'étape de démultiplexage à partir des signaux optiques en entrée ;
- une étape de multiplexage des composantes optiques en sortie obtenues par la mise en oeuvre du procédé de fusion en un signal optique de sortie.

## Patentansprüche

1. Vorrichtung zum Vermischen (20) einer Vielzahl optischer Komponenten, die jeweils mit einer selben Wellenlänge in einer der optischen Komponenten assoziiert sind, wobei die Vorrichtung Folgendes umfasst: für jede zu vermischende optische Komponente der Vielzahl optischer Komponenten,
- optische Mittel (31 - 33; 101 - 103), die angeordnet sind, in Abhängigkeit von einem Sperrsignal in eine Sperrposition der zu vermischenden optischen Komponente zu kippen;
- Kombinationsmittel (61, 62, 63), die angeordnet sind, das Sperrsignal zu erhalten;
- Duplizierungsmittel (41 - 43), die angeordnet sind, die zu vermischende optische Komponente hin zu den Kombinationsmitteln (61, 62, 63) zu duplizieren; und
- Mittel zum Vermischen (70), die angeordnet sind, die optischen Komponenten am Ausgang der optischen Mittel zu vermischen,
**dadurch gekennzeichnet, dass** die Kombinationsmittel (61, 62, 63) angeordnet sind, das Sperrsignal zu erhalten, indem die duplizierten optischen Komponenten der Vielzahl optischer Komponenten unter Ausschluss der duplizierten optischen Komponente der zu vermischenden optischen Komponente kombiniert werden.

2. Vorrichtung zum Vermischen nach Anspruch 1, wobei die optischen Mittel ferner angeordnet sind, die optische Komponente zu verstärken, und die Duplizierungsmittel am Ausgang der optischen Mittel angeschlossen sind.

3. Vorrichtung zum Vermischen nach Anspruch 1, wobei die optischen Mittel ferner angeordnet sind, die optische Komponente zu verstärken, und die Duplizierungsmittel am Eingang der optischen Mittel angeschlossen sind.

4. Vorrichtung zum Vermischen nach Anspruch 1, ferner umfassend, für jede optische Komponente der zu vermischenden Vielzahl, Verzögerungsmittel (91, 92, 93), die angeordnet sind, eine Verzögerung einer vorbestimmten festen Dauer auf die zu vermischende optische Komponente anzuwenden, und am Eingang der Sperrmittel angeschlossen sind, die mit der zu vermischenden optischen Komponente assoziiert sind.

5. Vorrichtung zum Vermischen nach Anspruch 1 oder 4, wobei in der Sperrposition die optischen Mittel die zu vermischende optische Komponente zu den Injektionsmitteln (71 - 73) hin ableiten, die angeordnet sind, die optische Komponente in einen Lichtwellenleiter mit einem Quellenknoten als Ziel erneut zu injizieren.

6. Vorrichtung zum Vermischen nach einem der vorhergehenden Ansprüche, wobei eine Steuerungseinheit die Kombinationsmittel bildet.

7. Optischer Kombinator optischer Signale, wobei ein optisches Signal optische Komponenten umfasst, die jeweils mit einer Vielzahl von Wellenlängen assoziiert sind, wobei der optische Kombinator Folgendes umfasst:
- Mittel zum Demultiplexen (11 - 13), die jeweils mit einem optischen Signal am Eingang assoziiert sind, die angeordnet sind, anhand des optischen Signals am Eingang eine Vielzahl optischer Komponenten zu erhalten;
- eine Vielzahl von Vorrichtungen zum Vermischen (20₁
- 20₄) nach Anspruch 1, die jeweils mit einer Wellenlänge assoziiert und am Ausgang der Mittel zum Demultiplexen angeschlossen sind;
- Mittel zum Multiplexen (14), die angeordnet sind, die optischen Komponenten am Ausgang der Vorrichtungen zum Vermischen in ein optisches Ausgangsignal zu multiplexen.

8. Optischer Knoten (100) zum Aggregieren optischer Signale, wobei ein optisches Signal eine Vielzahl optischer Komponenten umfasst, die jeweils mit einer Vielzahl von Wellenlängen assoziiert sind, wobei der Knoten Folgendes umfasst:
- einen optischen Kombinator optischer Signale nach Anspruch 7, der angeordnet ist, optische Signale, die jeweils von optischen Quellenknoten empfangen werden, zu einem optischen Signal zu kombinieren;
- eine Vorrichtung zum Verteilen eines optischen Signals, die angeordnet ist, ein empfangenes optisches Signal hin zu den Quellenknoten zu verteilen.

9. Verfahren zum Vermischen einer Vielzahl optischer Komponenten, die jeweils mit einer selben Wellenlänge assoziiert sind, in einer der optischen Komponenten, umfassend einen Schritt (E1) des Duplizierens der optischen Komponenten der zu vermischenden Vielzahl, im Verlauf dessen die zu vermischenden optischen Komponenten dupliziert werden, wobei das Verfahren **dadurch gekennzeichnet ist, dass** es ferner Folgendes umfasst:
- einen Schritt (E2) des Erhaltens von Sperrsignalen, wobei ein Sperrsignal, das mit einer zu vermischenden optischen Komponente assoziiert ist, erhalten wird, indem die duplizierten optischen Komponenten der Vielzahl optischer Komponenten, ausgenommen die duplizierte optische Komponente der zu vermischenden optischen Komponente, kombiniert werden;
- einen Schritt (E3) des Sperrens, im Verlauf dessen eine zu vermischende optische Komponente in Abhängigkeit von dem assoziierten Sperrsignal gesperrt wird;
- einen Schritt (E4) des Erhaltens der vermischten optischen Komponente, die mit der Wellenlänge assoziiert ist, anhand einer nicht gesperrten optischen Komponente.

10. Verfahren zum optischen Kombinieren optischer Signale, wobei ein optisches Signal optische Komponenten umfasst, die jeweils mit einer Vielzahl von Wellenlängen assoziiert sind, umfassend:
- einen Schritt des Demultiplexens der optischen Signale am Eingang, um anhand eines optischen Signals am Eingang eine Vielzahl optischer Komponenten zu erhalten;
- eine Umsetzung des Verfahrens zum Vermischen nach Anspruch 9 für die optischen Komponenten, die mit einer Wellenlänge assoziiert sind, die bei dem Schritt des Demultiplexens anhand der optischen Signale am Eingang erhalten wurden;
- einen Schritt des Multiplexens der optischen Komponenten am Ausgang, die durch die Umsetzung des Verfahrens zum Vermischen zu einem optischen Ausgangsignal erhalten wurden.

## Claims

1. Device (20) for merging a plurality of optical components each associated with one and the same wavelength into one of the optical components, the device comprising:
for each optical component to be merged from said plurality of optical components,
- optical means (31-33; 101-103), designed to shift to a position for blocking said optical component to be merged depending on a blocking signal;
- combining means (61,62,63) designed to obtain said blocking signal;
- duplicating means (41-43), designed to duplicate said optical component to be merged to the combining means (61,62,63); and
- merging means (70), designed to merge the optical components at the output of the optical means,
**characterized in that** the combining means (61,62,63) are designed to obtain said blocking signal by combining the duplicated optical components from the plurality of optical components, excluding the duplicated optical component of said optical component to be merged.

2. Merging device according to Claim 1, wherein the optical means are furthermore designed to amplify the optical component and the duplicating means are connected at the output of the optical means.

3. Merging device according to Claim 1, wherein the optical means are furthermore designed to amplify the optical component and the duplicating means are connected at the input of the optical means.

4. Merging device according to Claim 1, furthermore comprising, for each optical component from said plurality to be merged, delaying means (91,92,93) designed to apply a delay of predetermined fixed duration to said optical component to be merged and connected at the input of the blocking means associated with said optical component to be merged.

5. Merging device according to Claim 1 or 4, wherein, in the blocking position, the optical means divert said optical component to be merged to injection means (71-73) that are designed to reinject said optical component into an optical fibre destined for a source node.

6. Merging device according to any one of the preceding claims, wherein a control unit forms the combining means.

7. Optical combiner of optical signals, an optical signal including optical components respectively associated with a plurality of wavelengths, said optical combiner comprising:
- demultiplexing means (11-13) respectively associated with an optical signal at the input and designed to obtain, from the optical signal at the input, a plurality of optical components;
- a plurality of merging devices (20₁-20₄) according to Claim 1, respectively associated with a wavelength and connected at the output of the demultiplexing means;
- multiplexing means (14), designed to multiplex the optical components at the output of the merging devices into an optical output signal.

8. Optical node (100) for aggregating optical signals, an optical signal including a plurality of optical components respectively associated with a plurality of wavelengths, said node comprising:
- an optical combiner of optical signals according to Claim 7, designed to combine optical signals respectively received from source optical nodes into an optical signal;
- a device for distributing an optical signal, designed to distribute a received optical signal to said source nodes.

9. Method for merging a plurality of optical components each associated with one and the same wavelength into one of the optical components, comprising a step (E1) of duplicating the optical components from said plurality to be merged, during which step said optical components to be merged are duplicated, the method being **characterized in that** it furthermore comprises:
- a step (E2) of obtaining blocking signals, in which a blocking signal associated with an optical component to be merged is obtained by combining the duplicated optical components from the plurality of optical components, with the exception of the duplicated optical component of said optical component to be merged;
- a blocking step (E3), during which an optical component to be merged is blocked depending on the associated blocking signal;
- a step (E4) of obtaining the merged optical component associated with the wavelength from an optical component that is not blocked.

10. Method for optically combining optical signals, an optical signal including optical components respectively associated with a plurality of wavelengths, comprising:
- a step of demultiplexing the optical signals at the input in order to obtain, from an optical signal at the input, a plurality of optical components;
- implementing the merging method according to Claim 9 for the optical components associated with a wavelength and obtained in the demultiplexing step from the optical signals at the input;
- a step of multiplexing the optical components at the output that are obtained by implementing the merging method into an optical output signal.
